# EUROPEAN PATENT APPLICATION

(11) **EP 3 016 255 A1**
(43) Date of publication of application: **04.05.2016**
(21) Application number: 14816601.0
(22) Date of filing: 18.06.2014
(51) Int. Cl.: H02K 33/18, A45D 33/30

(54) **VOICE COIL MOTOR AND BRUSH UNIT USING SAME**

(30) Priority: 24.06.2013 JP 2013131683
(71) Applicant: Shiseido Company Ltd., Chuo-ku Tokyo 104-0061 (JP)
(72) Inventor: TAKATA Motoki, Yokohama-shi Kanagawa 224-0025 (JP); FUJIOKA Tomochika, Tokyo 104-0061 (JP); TORII Akihito, Yokohama-shi Kanagawa 224-0025 (JP); HARUYAMA Tetsuya, Kumagaya-Shi Saitama 360-0034 (JP); YUI Katsuhiko, Kumagaya-Shi Saitama 360-0034 (JP)
(74) Representative: Diehl & Partner GbR
(86) International application number: PCT/JP2014/066145
(87) International publication number: WO 2014/208415

(57) **Abstract**

A voice coil motor comprising a stator having a magnetic circuit comprising permanent magnets magnetized in predetermined directions, and a yoke; a mover comprising a driven member connected to an end thereof, and a coreless coil perpendicular to the magnetic flux of the permanent magnets, the mover being linearly movably supported by the stator; and a spring for applying an elastic force to the mover in a direction separating the driven member from the stator, and a brush unit comprising such a voice coil motor.

## Description

### FIELD OF THE INVENTION

The present invention relates to a voice coil motor for linearly moving a driven member, and a brush unit comprising it.

### BACKGROUND OF THE INVENTION

A makeup brush comprising a bundle of brush fibers is widely used for base makeup, finish makeup and makeup adjustment by general consumers, beauticians such as makeup artists, etc. Particularly, a brush can apply powder cosmetics thinly to a skin to achieve natural finish without thick, powdery impression, unlike a puff. A brush can also carry out point makeup easily, with sharp impression to a face depending on the application of cosmetics.

Attempts have conventionally been conducted to provide electric makeup tools including puffs and brushes having brush fibers longitudinally vibrated for applying powder cosmetics. Such electric makeup tool generally uses as a driving mechanism a geared motor comprising a brushed DC motor combined with a speed reduction mechanism and a power-transmitting mechanism (cam) as described below.

JP 2006-34942 A describes an electric puff comprising an electric motor mounted in a case, a rotation shaft of the electric motor being connected to an operation shaft of a puff via a motion-converting means (or an eccentric member), so that the puff moves back and forth by operating the electric motor.

JP 2006-238998 A describes an electric makeup tool comprising a handle, and a holder supporting a makeup tool fixed to the handle, at least one of the handle and the holder being provided with an electric vibration means for vibrating the holder.

JP 2013-39420 A describes an electric eyelash brush, which is vibratable and rotatable in both directions without permitting a cosmetic liquid to leak from a bottle opening, the electric eyelash brush comprising a DC motor rotatable in both directions, which comprises a rotor and a shaft, whose centers of gravity are deviated from each other by a weight attached to the shaft.

JP 5-344912 A discloses an electric nail polisher comprising a body functioning as a grip portion, a stationary portion attached to a lower end of the body, and a reciprocal sliding member attached to the stationary portion, the sliding member being provided with a grinding portion, the stationary portion having a recess along the reciprocal direction of the sliding member, the recess receiving a projection of the sliding member reciprocally and slidably, and the stationary portion and the sliding member being separated by a rib. It describes that the electric nail polisher has a driving mechanism for converting the rotation of a driving means to reciprocal motion.

US Patent 3240966 describes a portable electric tool comprising a sliding member connected to a rear end of a nail-polishing unit, the sliding member being reciprocally moved via a cam mechanism by the rotation of an electric motor, whose speed is reduced by a pinion and a ring gear.

However, because the vibration mechanisms described in JP 2006-238998 A, JP 2013-39420 A, JP 5-344912 A and US Patent 3240966 convert the rotation of DC motors to linear motion by gears, cams, etc., motors for desired torque generate extremely large sounds, such as sounds by high-speed rotation (usually about 1 x 10⁵ rpm), and gear-meshing sounds, particularly meshing sounds of bevel gears with worm gears to convert rotation to linear motion. When these vibration mechanisms are used in foundation brushes, etc. for makeup, their operation sounds are too large to accept in restrooms of hotels, restaurants, etc.

Also, when a common DC motor is used as a driving source, it is extremely difficult to satisfy all requirements of speed, thrust and size. For example, to satisfy the speed and the thrust, over-engineered designs should be used (for example, a large, high-power motor should be used), resulting in using a practically too large motor.

Specifically, to operate an electric foundation brush, a thrust of 1-1.5 N, a frequency of 15 Hz, and a reciprocal movement distance of 3 mm are needed. Also, to constitute an electric foundation brush by a DC motor, and a speed-reducing gear mechanism, a DC motor of about 8 mm x 6 mm x 10 mm (length) should be used. A DC motor of this size generates the number of rotation of about 10⁴ rpm (no load) and a torque of about 0.1 mN by voltage of 1.5 V. Accordingly, if speed preference design were made with a reciprocal movement distance of 3 mm, a speed reduction ratio would be about 1/11, and a thrust would be about 0.46 N, failing to obtain a necessary torque. On the other hand, if thrust preference design were made, a speed reduction ratio of about 1/24 would be necessary to obtain a thrust of 1 N, resulting in an insufficient speed of 20.8 mm/sec (about 7 Hz). Accordingly, to satisfy both requirements of thrust and speed, a large, high-power motor is needed, failing to produce an electric foundation brush of a practical size.

### OBJECTS OF THE INVENTION

Accordingly, an object of the present invention is to provide a driving mechanism comprising a voice coil motor capable of generating a large thrust at a high speed with a compact structure to carry out linear motion.

Another object of the present invention is to provide a small brush unit generating reduced driving sound.

### DISCLOSURE OF THE INVENTION

As a result of intensive research in view of the above object, the inventors have found that, a driving-assisting spring mounted in a coil-driven voice coil motor in a driving direction can generate large thrust and speed. The present invention has been completed based on such finding.

Thus, the voice coil motor of the present invention comprises
a stator having a magnetic circuit comprising permanent magnets magnetized in predetermined directions, and a yoke;
a mover comprising a driven member connected to an end thereof, and a coreless coil perpendicular to the magnetic flux of the permanent magnets, the mover being linearly movably supported by the stator; and
a spring for applying an elastic force to the mover in a direction separating the driven member from the stator.

The spring is preferably attached to the stator, such that the mover is permitted to move in a direction that the driven member moves toward the stator.

The voice coil motor preferably comprises a stop means for limiting a movement range of the mover at each end of the movement range, the stop means comprising a shock-absorbing member on a surface to which the mover abuts.

The movement of the mover is preferably controlled by a driving signal from a small one-chip microcomputer.

The brush unit of the present invention comprises
a movable brush member comprising a makeup brush at one end thereof;
the above voice coil motor, in which the movable brush member as a driven member is connected to the mover;
a control circuit for supplying driving current to the voice coil motor;
a power supply electrically connected to the control circuit for supplying power thereto; and
a case containing part of the movable brush member, the voice coil motor, the control circuit, and the power supply.

The power supply preferably comprises a battery having an electromotive force of 3 V.

### BRIEF DESCRIPTION OF THE DRAWINGS

Fig. 1 is a perspective view showing an example of the appearances of the brush unit of the present invention.
Fig. 2 is an exploded perspective view showing the brush unit of Fig. 1.
Fig. 3 is a view showing a cross section (perpendicular to the X direction) of the brush unit of Fig. 1.
Fig. 4 is a view showing a cross section (perpendicular to the Y direction) of the brush unit of Fig. 1.
Fig. 5 is an exploded perspective view showing the voice coil motor of the present invention, which is assembled in the brush unit of Fig. 1.
Fig. 6 is a side view showing the voice coil motor of Fig. 5 in the X direction.
Fig. 7 is a view showing a cross section (perpendicular to the X direction) of the voice coil motor of Fig. 5.
Fig. 8 is a graph showing the measured driving sound of the brush unit of Example 1.
Fig. 9 is a graph showing the measured driving sound of the electric mascara of Comparative Example 1.
Fig. 10 is a graph showing the measured driving sound of the electric nail polisher of Comparative Example 2.

### DESCRIPTION OF THE PREFERRED EMBODIMENTS

The present invention will be explained in detail below referring to the attached drawings.

### [1] Voice coil motor

### (1) Entire structure

The voice coil motor of the present invention comprises
a stator having a magnetic circuit constituted by permanent magnets magnetized in predetermined directions, and a yoke;
a mover comprising a driven member connected to one end thereof, and a coreless coil perpendicular to the magnetic flux of the permanent magnets, the mover being linearly movably supported by the stator; and
a spring for applying an elastic force to the mover in a direction of separating the driven member from the stator.

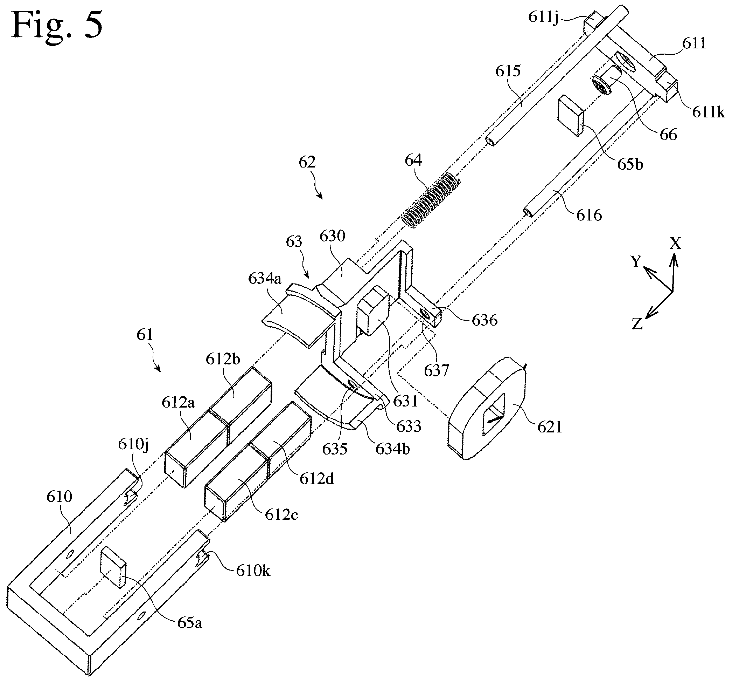

As shown in Figs. 5-7, the voice coil motor (VCM) 6 for driving a driven member (for example, a movable brush member 2 in a brush unit described below) is a movable-coil linear motor comprising a stator 61 comprising permanent magnets 612a, 612b, 612c, 612d and yokes 610, 611, and a mover 62 comprising a coreless coil 621 and a movable frame 63.

### (2) Stator

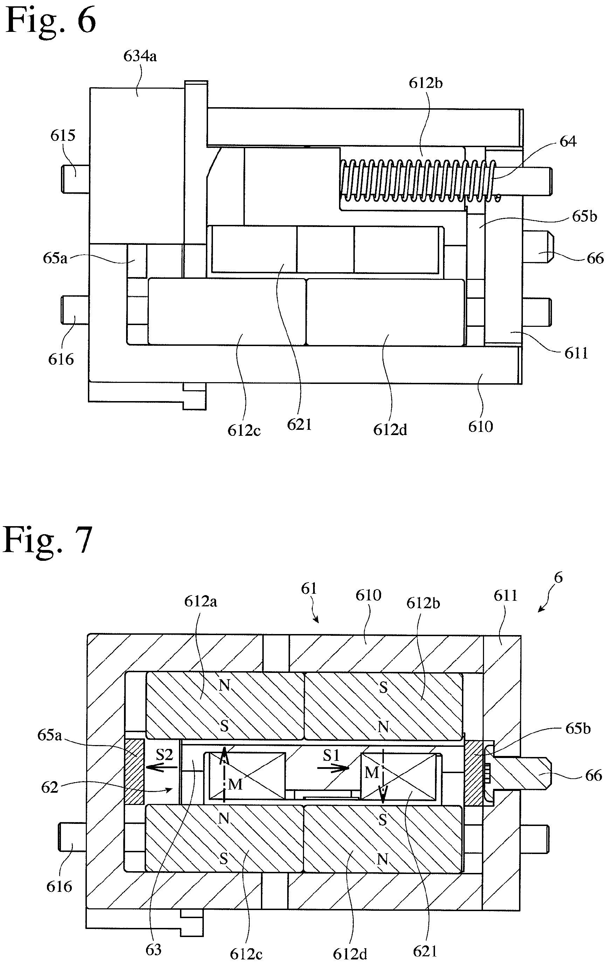

As shown in Fig. 5, the stator 61 comprises an annular yoke constituted by a first U-shaped yoke 610 and a second planar yoke 611 both made of ferromagnetic materials such as carbon steel, etc., and a magnetic circuit comprising permanent magnets 612a, 612b, 612c, 612d fixed inside the annular yoke. As shown in Fig. 7, the permanent magnets 612a, 612b, 612c, 612d are magnetized in a direction perpendicular to the coreless coil 621, the permanent magnets 612a and 612b being arranged along the moving direction of the mover 62, with their magnetic poles of opposite polarities adjacent to each other, and the permanent magnets 612c and 612d being arranged along the moving direction of the mover 62 at positions opposing the permanent magnets 612a and 612b via a magnetic gap, with their magnetic poles of opposite polarities adjacent to each other. The permanent magnets 612a and 612c opposing via the magnetic gap are arranged to have magnetic poles of opposite polarities on their opposing surfaces, and the permanent magnets 612b and 612d opposing via the magnetic gap are arranged to have magnetic poles of opposite polarities on their opposing surfaces, so that magnetic flux perpendicular to the coreless coil (shown by the arrow M in Fig. 7) is generated in the magnetic gap.

The stator 61 can be assembled by attaching the permanent magnets 612a, 612b, 612c, 612d to the first yoke 610, and then inserting each corner step 611j, 611k of the second yoke 611 into each end groove 610j, 610k of the first yoke 610.

### (3) Mover

As shown in Fig. 5, the mover 62 comprises a coreless coil 621 constituted by a wire wound in a plane perpendicular to the magnetic flux generated by the permanent magnets 612a, 612b, 612c, 612d (plane perpendicular to the Y-axis in Fig. 5), and a movable frame 63 holding the coreless coil 621.

The movable frame 63 for holding the coreless coil 621 comprises a coil-supporting member 630 having a positioning projection 631 for supporting the coreless coil 621, a rib 633 extending from an end of the coil-supporting member 630 and having a shaft hole 635, arcuate holders 634a, 634b extending from the rib 633 along the moving direction of the coreless coil 621 for holding the movable brush member 2, and a rib 636 extending from the other end of the coil-supporting member 630 and having a shaft hole 637. The coreless coil 621 can be easily positioned, with the positioning projection 631 inserted into a hollow portion of the coreless coil 621. The movable frame 63 is made of, for example, engineering plastics for weight reduction.

### (4) Compression coil spring

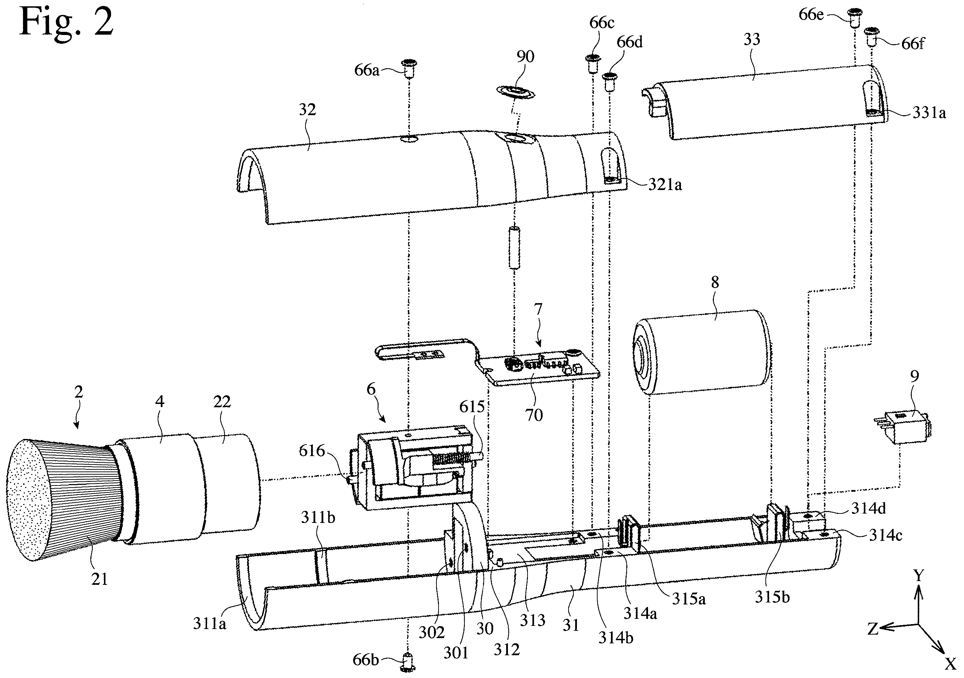

As shown in Fig. 5, the mover 62 is linearly movably supported by first and second guide shafts 615, 616. Each of the first and second guide shafts 615, 616 extends beyond the first yoke 610 at one end and the second yoke 611 at the other end in an unconstrained state, and as shown in Fig. 2, pressed into each hole 301, 302 of a seat 30 of a first case piece 31, thereby fixed inside the case 3. The first guide shaft 615 penetrates a shaft hole (not shown) of the rib 633, and the second guide shaft 616 penetrates a shaft hole 635 of the rib 633 and a shaft hole 637 of the rib 636 of the movable frame 63, thereby movably supporting the mover 62.

The first guide shaft 615 penetrates a compression coil spring 64 and a shaft hole (not shown) of the rib 633 of the movable frame 63. The compression coil spring 64 is set, such that (a) it is somewhat compressed in an opposite direction to the movable brush member 2 (the first direction); that (b) when the mover 62 moves in the first direction, the compression coil spring 64 is further compressed, and that (c) when the polarity of current flowing in the coreless coil 621 is reversed so that VCM 6 generates a thrust in a direction toward the movable brush member 2 (the second direction), it applies an elastic force to the mover 62. Namely, the compression coil spring 64 is set such that it permits the mover 62 to move in the first direction to make the movable brush member 2 move toward the stator 61, while applying an elastic force to the mover 62 in the second direction separating the movable brush member 2 from the stator 61. Accordingly, the spring constant of the compression coil spring 64 is determined such that when the mover 62 moves in the first direction, it generates a smaller elastic force than the thrust of the coreless coil 621.

### (5) Shock-absorbing member

A stop means for limiting a movement range of the mover 62 is preferably mounted to the mover 62 at each end of the movement range. The stop means preferably comprises a shock-absorbing member on a surface abutting the mover. To alleviate shock given by the mover 62 to the stator 61, thereby reducing shock sound, for example, when the mover 62 moving in the first or second direction abuts an inner surface of the stator 61, shock-absorbing members 65a, 65b formed by a porous elastic body (sponge), etc. are preferably attached to the inner surface of the stator 61. For example, the shock-absorbing member 65a is attached to the U-shaped yoke 610, and the shock-absorbing member 65b is attached to the planar yoke 611. The shock-absorbing members 65a, 65b may be attached to both end surfaces of the mover 62, to which the stator 61 abuts, in place of the inner surface of the stator 61. The shock-absorbing members 65a, 65b may be formed by other elastic bodies than the porous elastic bodies, such as rubber, etc.

### (6) Permanent magnet

Though the permanent magnets 612a, 612b, 612c, 612d may be known permanent magnets such as rare earth magnets, etc., they are preferably permanent magnets having high magnetic properties, for example, sintered R-Fe-B magnets, wherein R is one or more rare earth elements including Y, Nd being indispensable, to obtain a large thrust with little power consumption. The permanent magnets preferably have such magnetic properties as (BH)max of 40 MGOe (318 kJ/m³) or more, and Br of 1.3 T or more.

### [2] Brush unit

### (1) Entire structure

The brush unit of the present invention comprises
a movable brush member comprising a makeup brush at one end thereof;
the above voice coil motor, in which the movable brush member as a driven member is connected to the mover;
a control circuit for supplying driving current to the voice coil motor;
a power supply electrically connected to the control circuit for supplying power thereto; and
a case containing part of the movable brush member, the voice coil motor, the control circuit, and the power supply.

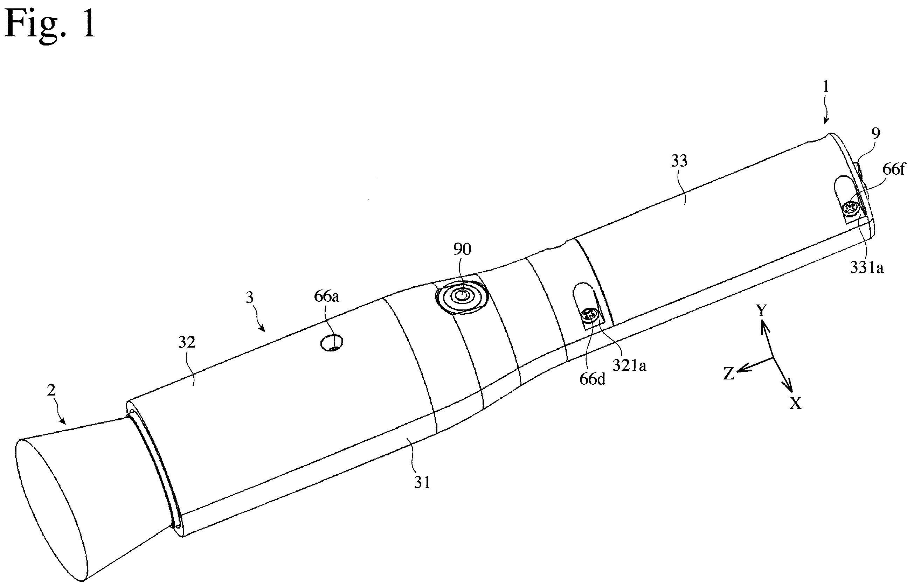

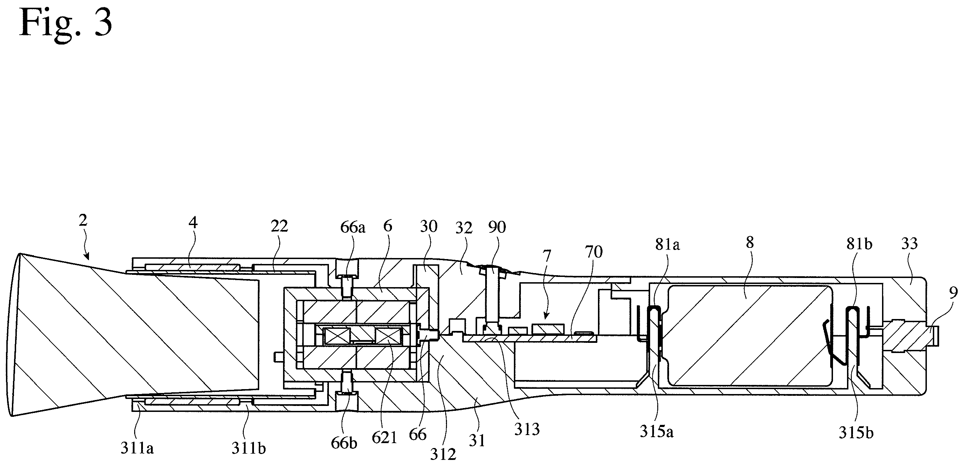

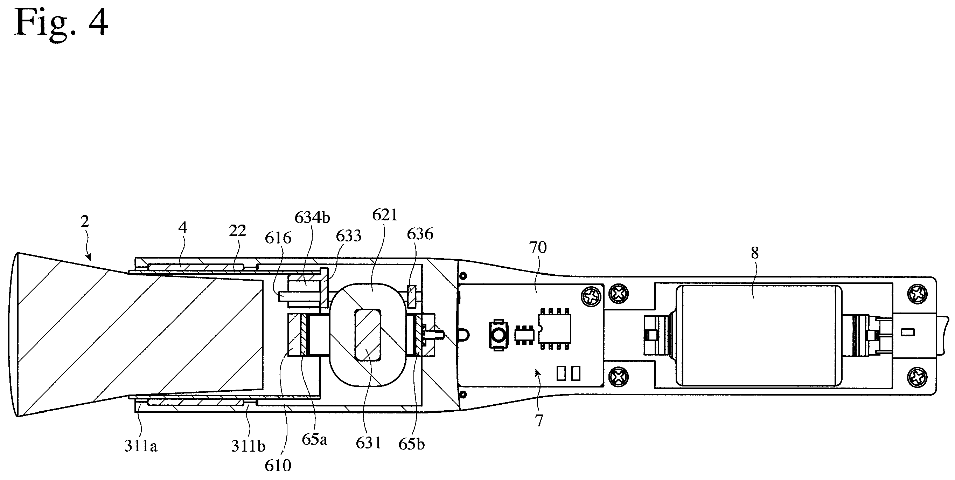

As shown in Figs. 1-4, the brush unit 1 comprises a movable brush member 2 comprising a holder 22 supporting a bundle of brush fibers 21, a collar 4 movably covering the movable brush member 2, and a case 3 containing them, which is, for example, cylindrical. The case 3 is constituted by a first case piece 31 having a semicircular cross section, and second and third case pieces 32 and 33 detachably mounted to the first case piece 31. The first case piece 31 comprises on an inner surface ribs 311a, 311b for holding the collar 4, a circuit support 312 having a groove 313 for holding a circuit board, a seat 30 disposed between the rib 311b and the circuit support 312, terminal supports 315a, 315b supporting terminals 81a, 81b, screw seats 314a, 314b having female screws for supporting a rear end of the second case piece 32, and screw seats 314c, 314d having female screws for supporting a rear end of the third case piece 33.

The case 3 contains a voice coil motor (VCM) 6 for linearly reciprocally moving the movable brush member 2 in a predetermined period, a control circuit 7 supplying driving current to the VCM 6 for control, and a power supply (battery) 8 for supplying power (DC voltage) to the control circuit 7. The VCM 6 is fixed to the seat 30 by screws 66 between the rib 311b and the circuit support 312. The control circuit 7 comprising a circuit board 70 is fixed to the board-holding groove 313 of the circuit support 312. The power of the battery 8 is supplied to the electrically connected control circuit 7 through the terminals 81a, 81b fixed to the terminal supports 315a, 315b.

To have reduced weight and such desired rigidity as to avoid breakage when used or contained in a bag, etc., the case 3 is preferably made of, for example, engineering plastics. To avoid the linear motion of the movable brush member 2 from being hindered by the flexure of the case 3 when its tip end is pushed by a finger, a reinforcing pipe (not shown) may be attached to the inner surface of the case 3, if necessary. The collar 4 is preferably made of a non-magnetic metal (for example, Al alloy) for reduced weight and high rigidity.

The brush unit 1 comprises a first case piece 31, in which a movable brush member 2, VCM 6, a control circuit 7 comprising circuit devices mounted on a flexible printed circuit board 70, a battery 8 and a main switch 9 are disposed at desired positions, a second case piece 32 to which a push switch 90 is assembled, and a third case piece 33; the first case piece 31 being covered with the second and third case pieces 32, 33, and fixed by screws 66a-66f through screw holes in screw seats 321a, 321b (not shown) of the second case piece 32, and screw seats 331a, 331b (not shown) of the third case piece 33. The battery 8 is easily exchangeable by detaching the third case piece 33. To reduce the exchange frequency of the battery 8, the battery 8 preferably has power of 3 V.

### (2) Control circuit

In the present invention, square-wave driving current, whose polarity is changed periodically, should be supplied to the coreless coil 621, to reciprocally move VCM 6. To this end, the control circuit 7 preferably comprises a one-chip microcomputer having a resolution of about 8-10 bits, which comprises, for example, ROM, RAM and a flash memory. Because such one-chip microcomputer can generate a desired square-wave driving signal, the frequency of VCM can be made variable in several steps (for example, 10 Hz, 20 Hz, and 30 Hz), thereby enabling users to use the brush unit 1 by their preference, unlike a case of a constant period using an electric motor having a speed-reducing gear mechanism.

Because the one-chip microcomputer can have a timer function, VCM can be automatically stopped after passing a predetermined period of time, even when the main switch malfunctions. Accordingly, it would be possible to prevent decrease in a battery life, even if a push switch were omitted.

### (3) Operation

When driving current is supplied to the coreless coil 621, a thrust is generated in a direction S1 or S2 depending on the polarity of the current according to the Fleming's left hand rule (see Fig. 7). For example, when a thrust is generated in the direction S 1, the movable frame 63 holding the movable brush member 2 moves in the direction S 1, so that elastic compression energy is stored in the compression coil spring 64. When the movable frame 63 reaches an end of stroke in the direction S1, the polarity of the current supplied to VCM 6 is reversed to generate a thrust in the direction S2, so that the movable brush member 2 moves in the direction S2 together with the movable frame 63. When the movable frame 63 moves in the direction S2, the compression coil spring 64 is relieved from a compressed state, discharging the stored elastic energy. As a result, the elastic force of the compression coil spring 64 is added to the thrust of VCM in the direction S2, resulting in a higher moving speed of the movable frame 63 (movable brush member 2) in the direction S2. When the movable frame 63 reaches an end of stroke in the direction S2, the polarity of the current supplied to VCM 6 is reversed, so that the movable frame 63 moves in the direction S1 again. Accordingly, the movable frame 63 (movable brush member 2) can be reciprocally moved in a predetermined period, by supplying driving current having polarity reversed in a predetermined period from the control circuit to the coreless coil 621.

The thrust F (N) of VCM can be determined by the Fleming's left hand rule in a range in which current is not so large, because the permanent magnets provide a sufficiently larger magnetic flux density B (T) than a magnetic flux density generated by current I (A). In this embodiment, the thrust F (N) of VCM in the case of using a coreless coil can be determined by the formula of F = I x B, when the permeability of the permanent magnets is regarded as permeability (µ₀) in vacuum.

In the above-described embodiment, the thrust of VCM 6 is given to the movable brush member 2 directly connected to VCM 6 for reciprocal movement, resulting in extremely reduced driving sound, which would be generated from gears, cams, etc. when using a rotation motor. In addition, because the brush unit 1 of the present invention does not have a speed reduction mechanism, which would be necessary when using a rotation motor, it has a simple structure capable of being made smaller in size and weight. With reduced weight, the brush unit 1 has low power consumption. With a timer function added to the control circuit to operate VCM 6 only in a predetermined period of time, the main switch 9 can be omitted by using a driving-current-shutting mechanism.

With the compression coil spring 64 attached to an end of VCM 6 on the opposite side to the projecting direction of the brush fibers 21, a thrust in the direction S2 can be increased. Also, the compression coil spring 64 keeps the movable brush member 2 at a predetermined position even when current is not supplied, preventing its movement in a longitudinal direction, and thus making it possible to use the brush while no current is supplied.

In this embodiment, because the open-loop control of VCM 6 is conducted with position sensors omitted for cost reduction, the mover 62 abuts the stator 61 at a stroke end. To reduce shock sound generated when the mover 62 abuts the stator 61, a shock-absorbing member (rubber, sponge, spring, etc.) is preferably attached to an abutting portion of the stator 61 or the mover 62.

The VCM 6 of the present invention can be used not only in a makeup unit comprising a foundation brush, but also in other makeup units such as a mascara, a nail polisher, etc.

The present invention will be explained in more detail referring to Examples, without intention of restricting the present invention thereto.

### Example 1

A VCM 6 having the following structure shown in Figs. 5-7 was produced. A compression coil spring 64 having a natural length of 20 mm and a spring constant of 0.05 N/mm was mounted, such that its length was 11 mm (9 mm compressed from the natural length) with no current supplied. The shock-absorbing members 65a, 65b used were 1-mm-thick polyurethane foams.

### Constitution of VCM

Weight of mover: 10 g,
Magnet: Sintered Nd-Fe-B magnet (Br = 1.4 T),
Air-gap magnetic flux density: 650 mT,
Magnetic gap: 0.3 mm,
Reciprocal movement of mover: 3 mm (1.5 mm of stroke on each side),
Thrust of VCM: 0.7 N,
Maximum thrust (maximum of thrust of VCM + elastic force of spring): 1.3 N, and
Operation frequency: 15 Hz.

This VCM was used to produce the brush unit shown in Figs. 1-4. In this brush unit, the mover 62 was pushed in the direction S2 (see Fig. 7) by the elastic force of the compression coil spring 64, while no current was supplied, resulting in the brush fibers 21 projecting from the cylindrical case 3.

When the mover 62 was moved 3 mm in the direction S1 with DC voltage having predetermined polarity applied to the coreless coil 621, the length of the spring was compressed to 8 mm (12 mm compressed from the natural length), to exert an elastic force of 0.6 N (= 12 mm x 0.05 N/mm) to the mover 62 in the direction S2 (opposite to the thrust of VCM). Because this elastic force was smaller than the thrust (0.7 N) of VCM 6, the brush fibers 21 was moved in the direction S 1. When the polarity of driving voltage was then switched to move the mover 62 in the direction S2, the elastic force of 0.6 N (12 mm x 0.05 N/mm) was added to the thrust of the mover 62, the brush fibers 21 was pushed out by a thrust of 1.3 N (= 0.7 N + 0.6 N). Thus, the use of the compression coil spring 64 enabled the brush fibers 21 to contact with a face by a larger force than the thrust generated by VCM in a predetermined period.

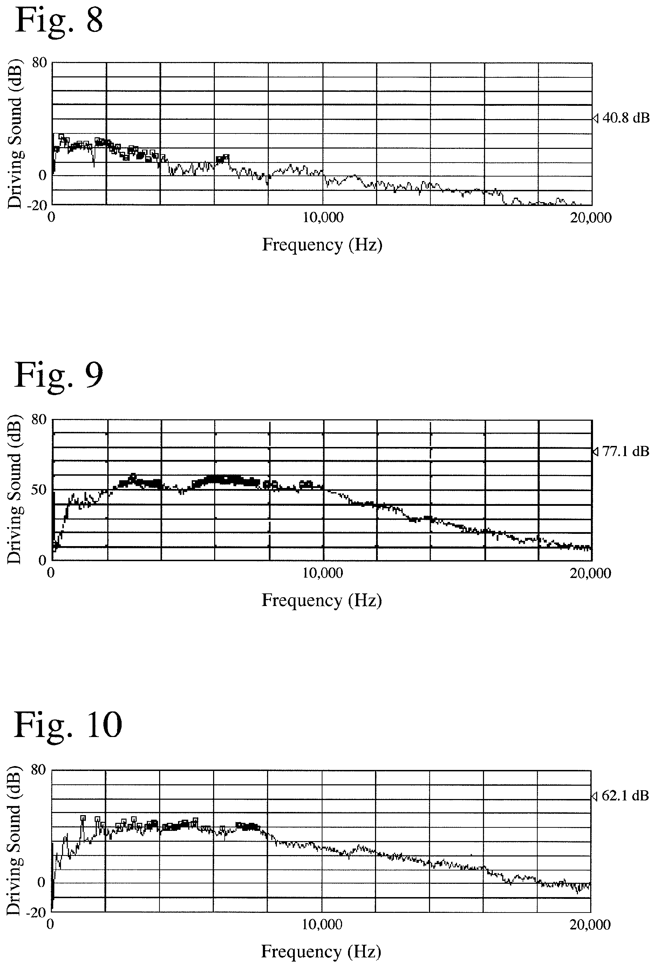

The measured driving sound of the brush unit comprising this VCM is shown in Fig. 8. This brush unit had a driving sound of 40.8 dB.

### Comparative Examples 1 and 2

For comparison, a commercially available electric makeup tool (electric mascara, Beauty Vision Electore mascara available from KOSÉ Corporation) [Comparative Example 1], and another electric makeup tool (nail polisher, LCN-31 available from Izumi Products Company) [Comparative Example 2] each using a rotation motor were measured with respect to driving sound. Their results are shown in Figs. 9 and 10. The driving sound was 77.1 dB in Comparative Example 1, and 62.1 dB in Comparative Example 2.

The measured driving sounds are shown in Table 1. These results indicate that the brush unit of Example 1 using VCM generates drastically reduced driving sound as compared with the conventional electric makeup tools.

**Table 1**

| No. | Driving Sound (dB) |
|---|---|
| Example 1 | 40.8 |
| Comparative Example 1 | 77.1 |
| Comparative Example 2 | 62.1 |

### Example 2

A brush unit was produced in the same manner as in Example 1, except for changing a magnetic flux density in a magnetic gap, the diameter of a wire constituting the coil, the number of windings in the coil, driving voltage, etc., such that the thrust of VCM was 1.0 N.

In this VCM, the thrust of 1.0 N was larger than the elastic force (0.6 N) of the spring, which was generated in an opposite direction to the thrust of VCM when the mover 62 was moved 3 mm in the direction S1, so that the brush fibers 21 could be moved in the direction S 1. Also, when the mover 62 was moved in the direction S2, the elastic force of 0.6 N (12 mm x 0.05 N/mm) was added to the thrust of 1.0 N applied to the mover 62, so that the brush fibers 21 was pushed out by a thrust of 1.6 N (= 1.0 N + 0.6 N), to come into contact with a face.

### EFFECTS OF THE INVENTION

Because the voice coil motor of the present invention can generate larger thrust and speed than conventional ones with a compact structure, it is suitable for an electric brush unit comprising a brush movable back and forth in a longitudinal direction.

Because a brush unit comprising the voice coil motor of the present invention has smaller size and weight and generates drastically reduced driving sound than conventional ones, it is suitable for a foundation brush, etc.

## Claims

1. A voice coil motor comprising
a stator having a magnetic circuit constituted by permanent magnets magnetized in predetermined directions, and a yoke;
a mover comprising a driven member connected to one end thereof, and a coreless coil perpendicular to the magnetic flux of said permanent magnets, said mover being linearly movably supported by said stator; and
a spring for applying an elastic force to said mover in a direction separating said driven member from said stator.

2. The voice coil motor according to claim 1, wherein said spring is attached to said stator, such that said mover is permitted to move in a direction that said driven member moves toward said stator.

3. The voice coil motor according to claim 1 or 2, which comprises a stop means for limiting a movement range of said mover at each end of said movement range, said stop means comprising a shock-absorbing member on a surface to which said mover abuts.

4. The voice coil motor according to any one of claims 1-3, wherein the movement of said mover is controlled by a driving signal from a small one-chip microcomputer.

5. A brush unit comprising
a movable brush member comprising a makeup brush at one end thereof; the voice coil motor recited in any one of claims 1-4, in which said movable brush member as a driven member is connected to said mover;
a control circuit for supplying driving current to said voice coil motor;
a power supply electrically connected to said control circuit for supplying power thereto; and
a case containing part of said movable brush member, said voice coil motor, said control circuit, and said power supply.

6. The brush unit according to claim 5, wherein said power supply comprises a battery having an electromotive force of 3 V.
